# EUROPEAN PATENT APPLICATION

(11) **EP 4 574 675 A1**
(43) Date of publication of application: **25.06.2025**
(21) Application number: 23217786.5
(22) Date of filing: 18.12.2023
(51) Int. Cl.: B64D 37/02, B64D 37/04, B64D 37/30

(54) **AIRCRAFT WITH FUEL TANKS**

(71) Applicant: Airbus Operations GmbH, 21129 Hamburg (DE)
(72) Inventor: Benthien, Hermann, 21129 Hamburg (DE); Siemann, Martin, 21129 Hamburg (DE)

(57) **Abstract**

Disclosed is an aircraft 1, 7 comprising a fuselage 20, at least one engine, at least two tanks 10, 10', 70, 70', and a supply system configured to feed the at least one engine with fuel from the fuel tanks 10, 10', 70, 70'. Therein, the at least two fuel tanks 10, 10', 70, 70' are equal in shape and dimension.

## Description

The present invention concerns an aircraft comprising a fuselage, at least one engine, two or more fuel tanks, and a supply system configured to feed the at least one engine with fuel from the fuel tanks.

Aircraft typically comprise one or more fuel tank/s containing a fuel to be supplied to the aircraft's one or more propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed as aircraft engines. In either case, considerable space (volume) is needed, in the aircraft, for the hydrogen storage even in the liquid state thereof.

Fuel tanks of aircrafts typically have a tank wall comprising a (straight or bulged) cylindrical portion, the tank wall being enclosed with caps at its opposite open ends. To adapt the fuel tanks to a shape of the aircraft's fuselage, such as to best utilise the space thereof, fuel tanks having different shape and/or dimension may be arranged in the fuselage, in particular in an aft portion thereof. For instance, with regard to a designated direction of flight of the aircraft, while a more ahead one of at least two fuel tanks may have a cylindrical tank wall, the tank wall of a more aft fuel tank may be designed to comprise a conical (tapered) portion best fitting in a narrowing aft portion of the fuselage.

It is an object of the present invention to provide an aircraft with a particularly advantageous tank configuration.

The object is achieved with an aircraft according to claim 1. Advantageous embodiments are disclosed in the dependent claims, the description, and the drawings.

An aircraft according to the present invention comprises a fuselage, at least one engine, two or more fuel tanks, and a supply system configured to feed the at least one engine with fuel from the fuel tanks. Therein, the at least two fuel tanks are equal in shape and dimension (in particular in length, diameter and/or volume).

As is to be understood, the equity of the shape refers to the respective raw form of the fuel tanks and thus does not concern potential further details such as fuel outlets, installation means (e.g., bore holes), or added support reinforcements, for instance, by which the fuel tanks may differ from each other.

As compared to a configuration with at least two fuel tanks of different shape and/or dimension as mentioned above, the equity of the fuel tanks according to the present invention provides the advantages of a simplified manufacturing, assembly and maintenance of the fuel tanks which further can be installed in a similar process. Moreover, the equal tank size allows for further utilising respective operating components (such as pumps, pipes, valves etc.) which are identically sized, which further simplifies the configuration and maintenance processes. Furthermore, the same jigs can be used for the installation, testing, maintenance, and transport of the fuel tanks, in particular a common rail interface (preferably including a zero g support) for transporting the fuel tanks and lifting them into the fuselage.

The at least two fuel tanks may in particular each be configured as a respective pressure vessel for containing liquid hydrogen.

The supply system may be further configured to supply fuel from at least one of the fuel tanks to an auxiliary power unit the aircraft may further comprise (such as to a turboshaft engine and/or a fuel cell, for instance).

According to advantageous embodiments of the present invention, the at least two fuel tanks are installed or configured to be installed in an unpressurised aft of the fuselage (thus, in a caudal configuration) and/or in a row following a longitudinal axis of the fuselage (thus, in a tandem configuration).

Preferred embodiments of the aircraft according to the present invention further comprise a plurality of capsules containing respective tank operation systems, i.e., components serving for operating the fuel tank. For instance, the at least one capsule may include, as such component/s, at least one hydrogen pump, at least one heat exchanger and/or one or various pipe/s.

For instance, with respect to a designated direction of flight of the aircraft, at least one of the capsules may be attached to a respective fuel tank such that the capsule faces a circumference of the fuselage, in particular a roof portion, a bottom portion and/or a lateral portion of the fuselage. Such capsule may thus be attached to a tank wall of the respective fuel tank. With respect to an aircraft orientation designated for horizontal flight, the capsule may then be positioned under, above, or laterally to the fuel tank.

Additionally or alternatively, with respect to the designated direction of flight of the aircraft, at least one of the capsules may be attached to a front or to a back side of a respective fuel tank.

In particular, in an installed state of the fuel tanks, a first capsule may be attached to a first fuel tank, and a second capsule may be attached to a second fuel tank, wherein a position of the first capsule relative to the first fuel tank (as installed) may preferably differ from a position of the second capsule relative to the second fuel tank (as installed). For example, the first capsule may be attached to the first fuel tank so as to face a circumference of the fuselage as mentioned above, and the second one of the capsules may be attached to a front or to a back side of the second one of the fuel tanks. In these cases, with respect to the designated direction of flight of the aircraft, the first fuel tank preferably is installed ahead the second fuel tank.

By positioning the capsules in these ways, a space respectively available in the fuselage at the respective positions of the fuel tanks can be optimally used. Indeed, a diameter of the equally shaped fuel tanks is preferably determined by a fuselage diameter at the position of a more aft fuel tank, where the fuselage narrows towards the tail. By contrast, the diameter of the fuselage around a more ahead fuel tank is larger, thereby providing space for positioning the capsule on, under or laterally to a more ahead fuel tank. Thereby, the length of the more ahead fuel tank with the capsule attached thereto is not increased by the capsule, such that an overall length of the fuselage (said lengths measured in a designated direction of flight of the aircraft) can be reduced, which may even facilitate using a shorter landing gear.

In particular, to fulfil crashworthiness conditions (thus, to not exceed delimits of deceleration), with regard to the aircraft's orientation designated for horizontal flight, a buffer space is preferably left below the fuel tanks. Due to the fuselage being wider around the ahead fuel tank, in these embodiments, the buffer space below the more ahead fuel tank is larger than the buffer space below the more aft fuel tank, such that space is available for advantageously placing the capsule under or above the ahead fuel tank.

According to advantageous embodiments, the at least two fuel tanks are installed, in the fuselage, with different orientations relative to the fuselage.

In particular, the (identical) shape of the at least two fuel tanks may be asymmetric to a plane which is orthogonal to a longitudinal axis of the respective fuel tank at a centre thereof. In particular, opposite ends of a respective tubular tank wall of each fuel tank may be enclosed by respective caps having different diameters.

In the installed state, one of the fuel tanks may then be oriented as turned about 180° relative to another one of the fuel tanks.

For instance, the fuel tanks each may comprise a tubular tank wall which at least in a portion thereof narrows in a longitudinal direction of the respective fuel tank (and thus towards a respective smaller one of the fuel tank's caps). A more aft one of the fuel tanks may then advantageously be installed, in the fuselage, with its more narrow end (and thus, its smaller cap) directing towards the tail of the fuselage, and a more ahead one of the fuel tanks may be installed reversely, i.e., with its more narrow end directing in a designated direction of flight of the aircraft.

In particular, at least a portion of the respective tubular tank wall of the fuel tanks may have a (straight or bulged) conical shape. More specifically, between opposite caps closing its open ends, the tubular tank wall may entirely have a (straight or bulged) conical shape.

According to advantageous embodiments of the present invention, the fuselage comprises at least two access panels facilitating access to a respective one of the fuel tanks from the fuselage. The access panels may be configured to facilitate placement and/or removal of the respective fuel tank. With respect to the aircraft's orientation designated for horizontal flight, in a mounted state, the access panels each may at least partially extend on a roof portion, on a bottom portion, on a lateral portion, or on an oblique portion of the fuselage.

Such embodiments facilitate a particularly simple access, in particular installation and/or removal of the fuel tanks.

Additionally or alternatively, the fuselage may comprise an access panel which facilitates access to several of the two or more fuel tanks. Such common access panel may in particular facilitate placement and/or removal of both fuel tanks. This allows a reduction of access panels and, thereby, a particularly simple and lightweight configuration of the fuselage. Moreover, both fuel tanks can be installed with a lifting arrangement remaining stationary relative to the fuselage. A diameter of the common access panel preferably is smaller than a cumulated length of both fuel tanks, such that the fuel tanks are to be removed from and/or placed in the fuselage one after the other.

Analogously to the case above, with respect to the aircraft's orientation designated for horizontal flight, the common access panel may at least partially extend on a roof portion, on a bottom portion, on a lateral portion, or on an oblique portion of the fuselage.

In such embodiments, at least one of the fuel tanks is preferably movable, within the fuselage, between its respective installation position and a position of the access panel. To this end, the aircraft may comprise a rail system arranged in the fuselage and serving to guide the at least one fuel tank, preferably in longitudinal direction of the fuselage.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Moreover, aircraft components which do not specifically serve to explain the present invention (such as an engine or a fuel pipes) are omitted.

As is to be understood, relative location expressions such as "backwards", "ahead", "aft", "behind", "front" or "below" etc. relate to a designated direction and/or orientation of flight of the aircraft.

Shown are schematically in
- Fig. 1:: an aft portion of an aircraft according to an exemplary embodiment of the present invention;
- Fig. 2:: an aft portion of an aircraft according to an alternative exemplary embodiment of the present invention;
- Fig. 3a:: an aft portion of an aircraft according to the present invention with a fuselage facilitating a first possibility of access to the fuel tanks;
- Fig. 3b:: an aft portion of an aircraft according to the present invention with a fuselage facilitating a second possibility of access to the fuel tanks;
- Fig. 3c:: an aft portion of an aircraft according to the present invention with a fuselage facilitating a third possibility of access to the fuel tanks;

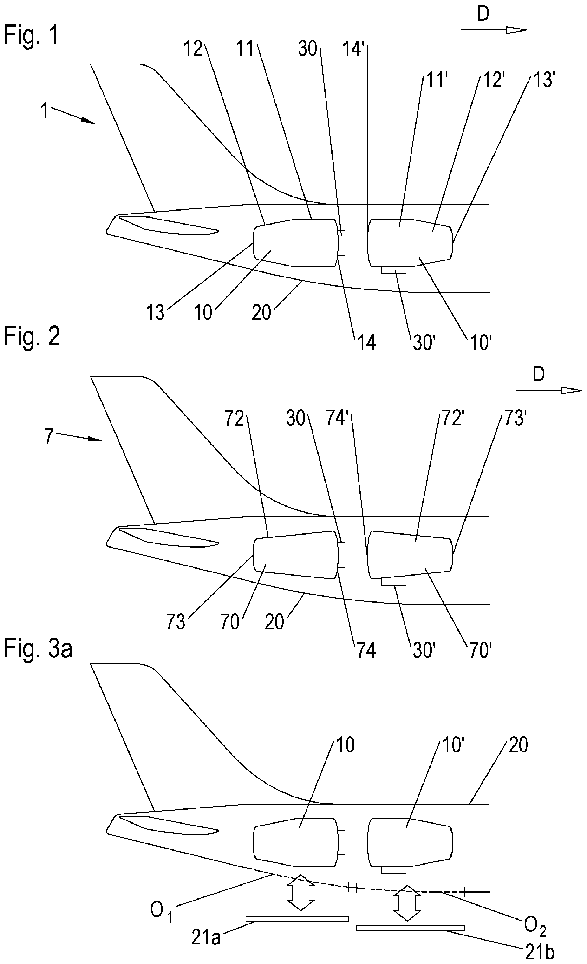

In Figure 1, the unpressurised aft portion of an exemplary aircraft 1 according to the present invention is schematically illustrated. Therein, for explanation purposes, an insight into the fuselage 20 of the aircraft 1 is provided, making visible that two fuel tanks 10, 10' are installed in tandem configuration (one behind the other) with respect to a designated flight direction D of the aircraft 1. Both tanks 10, 10' may preferably be configured as pressure vessels for containing liquid hydrogen as said fuel.

The fuel tanks 10, 10' are equal in shape and dimension. In particular, both include a respective cylindrical portion 11, 11' and respective conical portion 12, 12' which together form a tubular tank wall of the respective fuel tank. The tank wall is enclosed by respective caps 13, 13', 14, 14' which close the respective open ends of the tank wall. Due to the conical shape of portions 12, 12', the respective diameters of caps 13, 13' are smaller than the diameters of caps 14, 14'.

As seen in Figure 1, fuel tank 10' is positioned ahead the fuel tank 10. Therein, the fuel tanks 10, 10' are arranged so as to have reversed orientation with respect to the designated direction of flight D: While the conical portion 12' of the fuel tank 10' is arranged in a forward direction, the conical portion 12 of the more aft fuel tank 10 faces backwards. Thereby, the fuel tank 10 best fits in the fuselage narrowing towards the aircraft's tail.

As further illustrated in Figure 1, respective capsules 30, 30' are attached to each of the fuel tanks 10, 10'. The capsules 30, 30' each contain one or more tank operation system component/s (not shown) preferably accessing an inner space of the respective fuel tank 10, 10', such as at least one hydrogen pump, at least one heat exchanger and/or one or various pipe/s.

Therein, the capsules 30, 30' are attached to the respective fuel tanks 10, 10' at different positions thereof:
Indeed, the capsule 30 is attached to a front side of the more aft fuel tank 10. As a consequence, the fuel tank 10 can have a maximised diameter to fit in the narrowing aft portion of the fuselage 20, since in said position, the capsule attached thereto does not interfere with the fuel tank's vertical position with respect to the fuselage 20.

By contrast, the capsule 30' is attached to the more ahead fuel tank 10' so as to face a circumference of the fuselage 20; in the present case, the capsule 30' is attached to a bottom of the fuel tank 10'.

Around the more ahead fuel tank 10', the fuselage 20 is wider than around the more aft fuel tank 10 having the same shape and dimension as the fuel tank 10'. Therefore, while the respective distance between the fuel tanks 10, 10' and the fuselage 20 must be sufficient to fulfil crashworthiness requirements, there is more space available between the fuselage 20 and the fuel tank 10' than between the fuselage 20 and the fuel tank 10. In the embodiment shown, the extra space is utilised for the capsule 30'. Space forward and aft this fuel tank 10' thus is saved, which helps keeping the overall fuselage length smaller, thus benefiting the overall aircraft design and performance.

In Figure 2, the unpressurised aft portion of an alternative exemplary aircraft 7 according to the present invention is schematically illustrated. As in Figure 1, for explanation purposes, an insight into the fuselage 20 of the aircraft 7 is provided, making visible that two fuel tanks 70, 70' are installed in tandem configuration with respect to a designated flight direction D of the aircraft 7. As in the case shown in Figure 1, both tanks 70, 70' may preferably be configured as pressure vessels for containing liquid hydrogen as said fuel.

The fuel tanks 70, 70' are equal in shape and dimension, wherein in the embodiment shown in Figure 2, both fuel tanks 70, 70' have a respective tubular tank wall 72, 72' having a conical shape. The conical tank wall 72, 72' is enclosed by respective caps 73, 73', 74, 74' which close the respective open ends of the conical tank wall 72, 72'. Due to the conical shape, the respective diameters of caps 73, 73' are smaller than the diameters of caps 74, 74'.

Figures 3a - 3c each illustrate different access possibilities according to respective embodiments of the present invention. While the fuel tanks 10, 10' shown in these figures are in accordance with those shown in Figure 1, it is to be understood that the illustrated access possibilities also hold for alternatively shaped fuel tanks, such as for the fuel tanks 70, 70' shown in Figure 2, for instance.

In the exemplary cases depicted in Figures 3a - 3c, access panels 21a, 21a', 21b, 21b' closing, when mounted, respective openings O₁, O₂ extend on a bottom portion of the fuselage 20; alternatively or additionally, each of the access panels 21a, 21a', 21b, 21b' may respectively at least partially extend (when mounted) on a roof portion, on a lateral portion, or on an oblique portion of the fuselage 20.

In the case shown in Figure 3a, the fuselage 20 comprises two access panels 21a, 21b configured to provide access to a respective one of fuel tanks 10, 10' through openings O₁, O₂ the access panels 21a, 21b may selectively close. In the situation shown in Figure 3a, the access panels 21a, 21b are taken off.

Accordingly, as indicated by the double arrows, the fuel tanks 10, 10' each may be installed or removed through a dedicated one of said openings O₁, O₂.

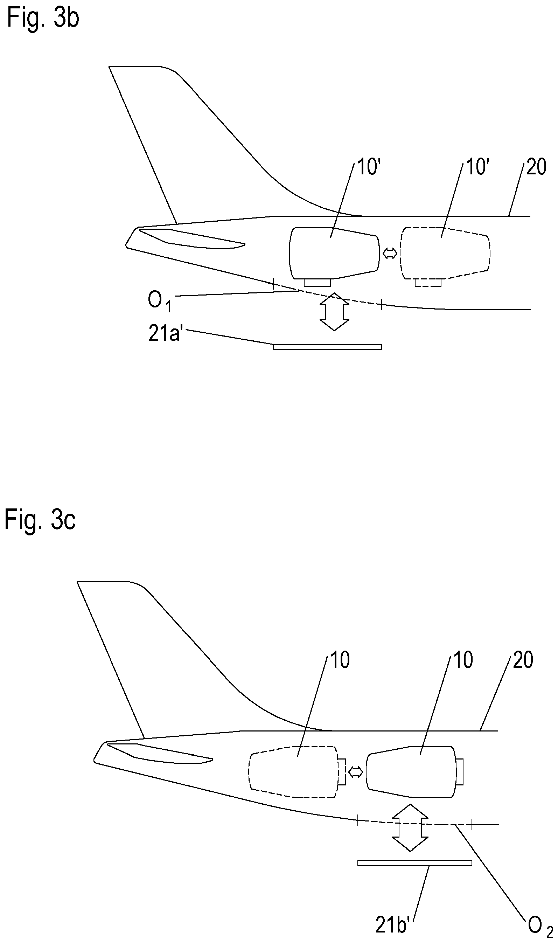

An alternative embodiment is illustrated in Figure 3b: In this case, both fuel tanks 10, 10' are accessible (in particular for installation and/or removal), one after the other, through a common opening O₁ selectively closable by access panel 21a'.

In Figure 3b, only the fuel tank 10' to be positioned more ahead is shown. For its installation, it may be lifted through opening O₁ into the fuselage 20, where the fuel tank 10' may then be moved forward to its installation position (as shown in Figure 1). Thereafter, the more aft fuel tank 10 may be inserted through opening O₁ (not shown). For moving forward the fuel tank 10', the aircraft may comprise a rail system arranged in the fuselage (not shown in the figures).

Figure 3c illustrates a further embodiment with a single access panel providing access to both fuel tanks 10, 10': In this case, both fuel tanks 10, 10' are accessible (in particular for installation and/or removal), one after the other, through a common opening O₂ selectively closable by access panel 21b'.

Therein, only the fuel tank 10 to be positioned behind the fuel tank 10' is shown in Figure 3c. For its installation, the fuel tank 10 may be lifted through opening O₂ into the fuselage 20 and then moved backwards to its installation position (as shown in Figure 1). Thereafter, the more ahead fuel tank 10' may be inserted through opening O₂ (not shown). For moving the fuel tank 10 backwards, the aircraft may comprise a rail system arranged in the fuselage (not shown).

Disclosed is an aircraft 1, 7 comprising a fuselage 20, at least one engine, at least two tanks 10, 10', 70, 70', and a supply system configured to feed the at least one engine with fuel from the fuel tanks 10, 10', 70, 70'. Therein, the at least two fuel tanks 10, 10', 70, 70' are equal in shape and dimension.

### Reference signs

- 1: aircraft
- 7: aircraft

- 10, 10': fuel tank
- 11, 11': cylindrical portion of tank wall
- 12, 12': conical portion of tank wall
- 13, 13': cap
- 14, 14': cap

- 70, 70': fuel tank
- 72, 72': conical tank wall
- 73, 73': cap
- 74, 74': cap

- 20: fuselage
- 21a, 21b, 21a', 21b': access panel

- 30, 30': capsule

- D: designated direction of flight
- O₁, O₂: opening

## Claims

1. Aircraft (1, 7) comprising a fuselage (20), at least one engine, at least two tanks (10, 10', 70, 70'), and a supply system configured to feed the at least one engine with fuel from the fuel tanks (10, 10', 70, 70'), **characterised in that** the at least two fuel tanks (10, 10', 70, 70') are equal in shape and dimension.

2. Aircraft according to claim 1, wherein the at least two fuel tanks (10, 10', 70, 70') are installed or configured to be installed in tandem caudal configuration within the fuselage (20) .

3. Aircraft according to one of claims 1 or 2, wherein the at least two fuel tanks (10, 10', 70, 70') each are configured as a respective pressure vessel for containing liquid hydrogen.

4. Aircraft according to one of the preceding claims, further comprising a plurality of capsules (30, 30') containing respective tank operation systems,
a first one of the capsules (30, 30') being attached to a first one of the fuel tanks (10, 10', 70, 70') and a second one of the capsules (30, 30') being attached to a second one of the fuel tanks (10, 10', 70, 70'),
wherein the first capsule (30, 30') has a position relative to the first tank (10, 10', 70, 70') as installed in the fuselage (20), which position is different from a position the second capsule (30, 30') has relative to the second fuel tank (10, 10', 70, 70') as installed in the fuselage (20).

5. Aircraft according to claim 4, wherein the first capsule (30') faces a circumference of the fuselage (20).

6. Aircraft according to one of claims 4 or 5, wherein with respect to a designated direction (D) of flight of the aircraft, the second capsule (30) is attached to a front or to a back side of the second fuel tank (10, 70).

7. Aircraft according to one of claims 5 or 6, wherein with respect to the designated direction (D) of flight of the aircraft (1, 7), the first fuel tank (10', 70') is installed in front of the second fuel tank (10, 70).

8. Aircraft according to one of the preceding claims, wherein the at least two fuel tanks (10, 10', 70, 70') are installed, in the fuselage (20), with different orientations relative to the fuselage (20) .

9. Aircraft according to one of the preceding claims, wherein each fuel tank (10, 10', 70, 70') comprises a tubular tank wall enclosed by opposite caps (13, 13', 14, 14', 73, 73', 74, 74') having different diameters.

10. Aircraft according to one of the preceding claims, wherein the fuselage (20) comprises
- at least two access panels (21a, 21b) facilitating access to a respective one of the fuel tanks (10, 10') and/or
- an access panel (21a', 21b') facilitating access to several of the at least two fuel tanks (10, 10').
